# EUROPEAN PATENT SPECIFICATION

(11) **EP 3 289 887 B1**
(45) Date of publication and mention of the grant of the patent: **23.06.2021**
(21) Application number: 16786390.1
(22) Date of filing: 21.04.2016
(51) Int. Cl.: A23L 2/40, A23L 2/54, A23L 2/58

(54) **CARBONATED DRINK WITH IMPROVED CARBONATION SENSATION**
KOHLENSÄUREHALTIGES GETRÄNK MIT VERBESSERTER KOHLENSÄUREEMPFINDUNG
BOISSON GAZEUSE CONFÉRANT UNE MEILLEURE SENSATION GAZEUSE

(30) Priority: 27.04.2015 JP 2015090884
(43) Date of publication of application: 07.03.2018
(73) Proprietor: Suntory Holdings Limited, Kita-ku, Osaka-shi Osaka 530-8203 (JP)
(72) Inventor: TAKAHASHI, Mizuho, Kawasaki-shi Kanagawa 211-0067 (JP)
(74) Representative: Vossius & Partner Patentanwälte Rechtsanwälte mbB
(86) International application number: PCT/JP2016/062583
(87) International publication number: WO 2016/175113

(56) References cited:
- WO-A1-02/080704
- WO-A1-2008/112844
- Mintel: "Diet Cola", , 1 January 2013 (2013-01-01), pages 1-2, XP055494481, Retrieved from the Internet: URL:http://www.gnpd.com/sinatra/record page/1971145/from_search/GHj59dJCK1/?page= 1 [retrieved on 2018-07-23]
- ANONYMOUS: "Pepsi Refresh Shot - RENEWAL", INTERNET CITATION, 25 March 2014 (2014-03-25), pages 1-2, XP009507472, Retrieved from the Internet: URL:https://www.suntory.co.jp/softdrink/ne ws/pr/d/sbf0120.html [retrieved on 2018-07-23]
- DIET COLA: 'MINTEL', [Online] 01 January 2013, pages 1 - 2, XP055494481 Retrieved from the Internet: <URL:http://www.gnpd.com/sinatra/record page/1971145/from_search/GHj59dJCK1/?page=1 >
- 'Pepsi Refresh Shot' RENEWAL, NEWS RELEASE, [Online] 25 March 2014, pages 1 - 2, XP009507472 Retrieved from the Internet: <URL:HTTP://WWW.SUNTORY.CO.JP/SOFTDRINK/NEW S/PR/D/SBF0120.HTML> [retrieved on 2016-07-04]
- 'Carbonated Cola Drink' MINTEL, [Online] 01 December 2013, pages 1 - 4, XP055494487 Retrieved from the Internet: <URL:HTTP://WWW.GNPD.COM/SINATRA/RECORDPAGE /2270301/FROM_SEARCH/F0PPYHUZ40/?PAGE=1>
- 'Zero Calorie Cola Drink' MINTEL, [Online] 01 August 2013, pages 1 - 2, XP055494491 Retrieved from the Internet: <URL:HTTP://WWW.GNPD.COM/SINATRA/RECORDPAGE /2033727/FROM_SEARCH/F0PPYHUZ40/?PAGE=1>
- MINTEL: 'Cola Drink', [Online] 2014, pages 1 - 3, XP055494498 Retrieved from the Internet: <URL:HTTP://WWW.GNPD.COM/SINATRA/RECORDPAGE /2448383/FROM_SEARCH/8IOUDYBVE4/?PAGE=2>
- 'Pepsi Refresh Shot' SHOHIN JOHO CALORY. 04 July 2016, pages 1 - 2, XP009507470 Retrieved from the Internet: <URL:HTTP://PRODUCTS.SUNTORY.CO.JP/D/490177 7273689> [retrieved on 2016-07-04]
- STAVRIC, B. ET AL.: 'Caffeine content in colas from New York State and Ontario' JOURNAL OF FOOD SAFETY vol. 8, no. 3, 01 January 1987, pages 179 - 185, XP055494504

## Description

### TECHNICAL FIELD

The present invention relates to a carbonated beverage having improved carbonation feeling, and a method for producing the same.

### BACKGROUND ART

Carbonated beverages are preferably drunk by a wide range of consumers. Currently commercially available carbonated beverages are various and have properties such as visually pleasing a drinker by foaming when a container is opened or when the carbonated beverage is poured into a container such as a glass, and giving a refreshing feeling through the throat during drinking. Patent Literature 1 discloses improving the feeling of bubbles in a carbonated beverage by adding a divalent inorganic metal salt such as magnesium chloride, magnesium sulfate, or calcium chloride in a specific amount.

### CITATION LIST

PTL 1: Japanese Patent Laid-Open No. 2006-246771

In a publication of Mintel of January 2013 a diet cola is described. Suntory Food International Co., Ltd. announced a Pepsi refresh shot renewal in May 2014.

### SUMMARY OF INVENTION

### TECHNICAL PROBLEM

The inventor of this application develops carbonated beverages containing caffeine. In the process, it has become clear that when the caffeine content of a carbonated beverage is increased, carbonation feeling can be not sufficiently obtained. Then, the inventor of this application has attempted to improve the carbonation feeling of a carbonated beverage containing caffeine by adding a divalent inorganic metal salt in a specific amount, or the like, but a sufficient effect has not been able to be obtained. The fact that there is room for improvement in carbonation feeling in a carbonated beverage containing caffeine has been found for the first time by the inventor of this application and is not known as conventional art or suggested. An object of the present invention is to provide a carbonated beverage containing caffeine that has improved carbonation feeling.

### SOLUTION TO PROBLEM

In view of the above circumstances, the inventor of this application has paid attention to various components that can be blended into carbonated beverages, and studied the relation between each component and carbonation feeling. As a result of diligent study, the inventor of this application has found that the presence of potassium in a specific amount in a carbonated beverage containing caffeine can contribute to the improvement of carbonation feeling. When having further pursued the study, the inventor of this application has found out that when a specific amount of potassium is combined with a specific amount of caffeine, carbonation feeling is significantly improved. Based on such findings, the inventor of this application has completed the present invention.

The present invention provides, but is not limited to, the following:
(1) A carbonated beverage comprising caffeine and potassium, the carbonated beverage comprising 10 mg to 40 mg of caffeine and 14 mg to 50 mg of potassium per 100 ml of the carbonated beverage.
(2) The carbonated beverage according to (1), further comprising caramel coloring.
(3) The carbonated beverage according to (1) or (2), further comprising sodium, wherein a total of potassium and sodium contents per 100 ml of the carbonated beverage is 40 mg or less.
(4) The carbonated beverage according to any of (1) to (3), comprising 25 mg or more of potassium per 100 ml of the carbonated beverage.
(5) A method for producing the carbonated beverage according to any of (1) to (4).

### ADVANTAGEOUS EFFECTS OF INVENTION

According to the present invention, carbonation feeling can be significantly improved in a carbonated beverage containing caffeine. Such an effect achieved by combining specific components, caffeine and potassium, at specific content is difficult to predict from conventional art.

### DETAILED DESCRIPTION OF THE INVENTION

### <Carbonated Beverage>

A carbonated beverage herein means one comprising carbonic acid gas and further comprising caffeine and potassium in specific amounts. Examples of the carbonated beverage include refreshing beverages, non-alcoholic beverages, and alcoholic beverages. More specific examples include, but are not limited to, sparkling beverages, cola, diet cola, ginger ale, soda pop, carbonated water provided with a fruit juice flavor, Chuhai (shochu-based beverages), and sparkling wines. The inventor of this application has found for the first time that by combining specific components, caffeine and potassium, at specific content, the carbonation feeling of a carbonated beverage can be synergistically increased. Here, the carbonation feeling herein means that the stimulus of carbonic acid is felt during the drinking of a beverage. The evaluation of carbonation feeling can be performed by a sensory test by an expert panel, as described in Examples below.

The carbonated beverage of the present invention contains caffeine and potassium. It has been known that even if general minerals such as sodium, magnesium, and calcium are blended in a beverage containing caffeine, carbonation feeling cannot be sufficiently obtained. In the present invention, carbonation feeling can be sufficiently improved by blending potassium. It is suggested that the effect is synergistic beyond that obtained by a simple combination of caffeine and potassium, and the effect cannot be expected from conventional art.

In the present invention, as caffeine, for example, a plant or a food containing caffeine may be used as it is, caffeine extracted or purified from the plant or food may be used, caffeine synthesized using a microorganism may be used, or organically synthesized caffeine may be used. More specifically, in addition to a purified product that can be blended into a food (a purified product having a caffeine content of 98.5% or more) and a roughly purified product (caffeine content 50% to 98.5%), an extract of a plant (tea leaves, kola nuts, coffee beans, guarana, or the like) containing caffeine or its concentrate may be used as caffeine in the present invention. The caffeine content in the carbonated beverage of the present invention is not particularly limited as long as the carbonation feeling of the carbonated beverage is improved. For example, the content of caffeine per 100 ml of the carbonated beverage can be 10 mg to 40 mg, 20 mg to 40 mg, or 30 mg to 40 mg. The measurement of the caffeine content may be performed by any method known to those skilled in the art and can be performed, for example, by filtering a beverage as a sample through a membrane filter (cellulose acetate membrane 0.45 µm manufactured by ADVANTEC) and subjecting the sample to HPLC set under the following conditions. The caffeine content is quantified herein by the method, unless otherwise mentioned.

### (Conditions for Quantifying Caffeine)

| | |
|---|---|
| • Column | TSK-gel ODS-80TsQA (4.6 mm ϕ x 150 mm, Tosoh Corporation) |
| • Mobile phase A | water:trifluoroacetic acid = 1000:0.5 |
| • Mobile phase B | acetonitrile:trifluoroacetic acid = 1000:0.5 |
| • Flow rate | 1.0 ml/min |
| • Column temperature | 40°C |
| • Gradient conditions | |
| retained at A:B = 95:5 from the start of analysis to 5 minutes later | |
| A:B = 5:95 from 5 minutes to 20 minutes | |
| retained at A:B = 5:95 from 20 minutes to 25 minutes | |
| A:B = 95:5 from 25 minutes to 26 minutes | |
| retained at A:B = 95:5 from 26 minutes to 30 minutes | |
| • Injection volume | 5.0 µl |
| • Detection wavelength | 280 nm |
| • Standard substance | anhydrous caffeine (NACALAI TESQUE, INC.). |

In the present invention, any material may be used as a source of potassium as long as blending it into foods is approved. Although not limited, for example, potassium carbonate, dipotassium hydrogen phosphate, potassium dihydrogen phosphate, tripotassium phosphate, potassium hydroxide, potassium lactate, potassium tartrate, potassium succinate, potassium malate, potassium citrate, and potassium fumarate can be used as the source of potassium in the present invention. The potassium content in the carbonated beverage of the present invention is not particularly limited as long as the carbonation feeling improvement effect is achieved. The lower limit of the potassium content per 100 ml of the carbonated beverage is 14 mg or more, 20 mg or more, 25 mg or more, 30 mg or more, 35 mg or more, or 40 mg or more. The upper limit of the potassium content can also be determined and is 50 mg or less, 45 mg or less, 40 mg or less, 35 mg or less, or 30 mg or less per 100 ml of the carbonated beverage. From another viewpoint, the content of potassium per 100 ml of the beverage can be
15 mg to 50 mg, 20 mg to 45 mg, 25 mg to 40 mg, or 30 mg to 40 mg. The measurement of the potassium content may be performed by any method well-known to those skilled in the art, and, for example, the potassium content can be measured by atomic absorption spectrophotometry (hydrochloric acid extraction method). In the present invention, the potassium content is measured by the method unless otherwise described.

The carbonated beverage of the present invention may further contain sodium. For the raw material that is a source of sodium, any one may be used as long as it can be blended into foods. Examples thereof include, but are not limited to, sodium chloride, sodium citrate, sodium gluconate, and sodium ascorbate. Here, it has become clear that when sodium is present in an amount exceeding a certain amount in a carbonated beverage containing caffeine, the improvement in carbonation feeling is hindered. The matter has been found for the first time by the inventor of this application and is difficult to predict from conventional art. In other words, in the present invention, the sodium content of the carbonated beverage is not particularly limited as long as the carbonation feeling improvement effect of the combination of caffeine and potassium is achieved. For example, the content of sodium can be 40 mg or less, 30 mg or less, 20 mg or less, or 10 mg or less per 100 ml of the carbonated beverage, or the carbonated beverage can comprise substantially no sodium, or the content of sodium can be 0 mg. In addition, in the present invention, the sodium content of the carbonated beverage can also be set in relation to the potassium content. For example, the total content of potassium and sodium can be 40 mg or less, 30 mg or less, or 25 mg or less per 100 ml of the carbonated beverage. The measurement of the sodium content may be performed by any method well-known to those skilled in the art, and, for example, the sodium content can be measured by atomic absorption spectrophotometry (hydrochloric acid extraction method). In the present invention, the sodium content is measured by the method unless otherwise described. Here, comprising substantially no sodium means that sodium is equal to or less than the detection limit by the measurement method.

The carbonated beverage of the present invention can contain no caramel coloring or can contain caramel coloring. Here, as the caramel coloring, known edible caramel coloring can be used. For example, caramel coloring obtained by heat-treating an edible carbohydrate typified by sugar or glucose, or caramel coloring obtained by adding an acid or an alkali and heat-treating an edible carbohydrate can be used as the caramel coloring. In addition, a sugar contained in a fruit juice or a vegetable juice can also be caramelized and used, and in this case, the sugar can be caramelized by heat treatment, acid treatment, alkali treatment, or the like. The content of caramel coloring in the carbonated beverage of the present invention can be appropriately set.

The carbonated beverage of the present invention can be prepared by mixing the required amounts of caffeine and potassium and other components with water and injecting carbonic acid gas. Here, the injection of carbonic acid gas can be performed by usual means. Alternatively, the carbonated beverage of the present invention can be prepared by mixing the required amounts of caffeine and potassium and other components with carbonated water. In addition, the carbonated beverage of the present invention can be prepared by mixing a syrup and water and injecting carbonic acid gas. Further, the carbonated beverage of the present invention can also be prepared by mixing a syrup and carbonated water. The syrup herein means a solution containing at least one of caffeine, potassium, sodium, caramel coloring, and other components to be blended into the carbonated beverage. The scope of the present invention also extends to the syrup. The mixing of the syrup and water or carbonated water may be performed, for example, by adding water or carbonated water to a container containing the syrup, may be performed by adding the syrup to a container containing water or carbonated water, or may be performed by transferring the syrup and water or carbonated water to another container. In addition, the syrup and water or the carbonated water may be mixed in the same facility to prepare the carbonated beverage. Alternatively, a container or the like containing the syrup may be transported to another facility, and the syrup is mixed with water or carbonated water to prepare the carbonated beverage. Further, it is possible that the syrup is transported to a restaurant or the like, and a user mixes the syrup and water or carbonated water using hands, a tool, a machine, or the like to prepare the carbonated beverage.

Gas pressure regarding a carbonated beverage herein means gas pressure in a container unless otherwise described. Examples of the carbonated beverage of the present invention include, but are not limited to, a carbonated beverage, wherein carbonic acid is adjusted, for example, at a gas pressure of 0.7 kgf/cm² to 5.0 kgf/cm² or 1.0 kgf/cm² to 4.0 kgf/cm². The gas pressure can be measured by any method known to those skilled in the art. For example, the gas pressure can be measured by fixing a beverage set at 20°C in a gas internal pressure meter, opening the gas internal pressure meter cock once to remove gas, closing the cock again, swinging the gas internal pressure meter, and reading the value when the pointer reaches a certain position. The gas pressure is measured herein using the method, unless otherwise described.

The carbonated beverage of the present invention may further comprise components generally used in carbonated beverages, such as sweeteners (sucrose, glucose, fructose, isomerized liquid sugars, and high intensity sweeteners such as aspartame, sucralose, acesulfame K, and stevia), flavoring agents, acidulants (citric acid, tartaric acid, malic acid, phosphoric acid, and lactic acid), colorants, fruit juices and fruit juice purees, milk and milk products, nutrient supplements (vitamins, calcium, minerals, amino acids, and the like), and preservatives (sodium benzoate and the like), as long as the carbonation feeling improvement effect is not hindered. These components can be blended singly or in combination of a plurality of these components into the carbonated beverage.

The carbonated beverage of the present invention can be filled into a container. For the container, a container of any form and material may be used, and, for example, a container such as a bottle, a can, a barrel, or a PET bottle can be used.

### <Method for Producing Carbonated Beverage>

According to another aspect of the present invention, a method for producing a carbonated beverage is provided. The production method comprises preparing a syrup, adjusting the amount of the liquid, and supplying carbonic acid gas. The syrup herein means a solution containing at least one component described above contained in the carbonated beverage.

The syrup can be prepared by dissolving caffeine and potassium, and, as required, sodium, caramel coloring, or other materials, in water. As caffeine, for example, a plant or a food containing caffeine may be used as it is, caffeine extracted or purified from the plant or food may be used, caffeine synthesized using a microorganism may be used, or organically synthesized caffeine may be used. More specifically, in addition to a purified product that can be blended into a food (a purified product having a caffeine content of 98.5% or more) and a roughly purified product (caffeine content 50% to 98.5%), an extract of a plant (tea leaves, kola nuts, coffee beans, guarana, or the like) containing caffeine or its concentrate may be used as caffeine in the present invention. The caffeine content in the carbonated beverage of the present invention is not particularly limited as long as the carbonation feeling of the carbonated beverage is improved. The caffeine content of the syrup is set so that the caffeine content per 100 ml of the carbonated beverage is 10 mg to 40 mg, 20 mg to 40 mg, or 30 mg to 40 mg.

Examples of potassium that can be blended into the syrup include, but are not limited to, potassium carbonate, dipotassium hydrogen phosphate, potassium dihydrogen phosphate, tripotassium phosphate, potassium hydroxide, potassium lactate, potassium tartrate, potassium succinate, potassium malate, potassium citrate, and potassium fumarate. The potassium content is not particularly limited as long as the carbonation feeling of the carbonated beverage is improved. The lower limit of the potassium content of the syrup can be set so that the potassium content per 100 ml of the carbonated beverage is 14 mg or more, 20 mg or more, 25 mg or more, 30 mg or more, 35 mg or more, or 40 mg or more. The upper limit of the potassium content of the syrup can also be set, and in this case, it can be set so that the potassium content per 100 ml of the carbonated beverage is 50 mg or less, 45 mg or less, 40 mg or less, 35 mg or less, or 30 mg or less. From another viewpoint, the potassium content of the syrup can be set so that the potassium content per 100 ml of the carbonated beverage is 15 mg to 50 mg, 20 mg to 45 mg, 25 mg to 40 mg, or 30 mg to 40 mg, but is not limited to these.

It is possible that the syrup comprises substantially no sodium so that the obtained carbonated beverage comprises substantially no sodium. Here, comprising substantially no sodium means that sodium is equal to or less than the detection limit when measured by the method shown herein. Alternatively, it is possible that sodium is contained in the syrup so that the carbonated beverage comprises sodium. In this case, the sodium content of the syrup is not particularly limited as long as the effect of improving the carbonation feeling of the carbonated beverage by the combination of caffeine and potassium is achieved. For example, the sodium content of the syrup can be set so that the sodium content per 100 ml of the carbonated beverage is 40 mg or less, 30 mg or less, 20 mg or less, 10 mg or less, or 0 mg. In addition, the sodium content of the syrup can also be set in relationship with the potassium content. For example, the total content of potassium and sodium in the syrup can be set so that the total content of potassium and sodium per 100 ml of the carbonated beverage is 40 mg or less, 30 mg or less, or 25 mg or less. These matters are based on the new finding found by the inventor of this application that when sodium is present in an amount exceeding a certain amount in a carbonated beverage containing caffeine, the improvement of carbonation feeling is hindered. These matters are difficult to attain or predict from conventional art. Here, sodium may be derived from, for example, sodium chloride, sodium citrate, sodium gluconate, and sodium ascorbate, but these are not limiting.

The syrup of the present invention can comprise no caramel coloring or can comprise caramel coloring. When the syrup contains caramel coloring, the amount of caramel coloring blended can be appropriately set. Here, as the caramel coloring, known edible caramel coloring can be used, and, for example, caramel coloring obtained by heat-treating an edible carbohydrate typified by sugar or glucose or caramel coloring obtained by adding an acid or an alkali and heat-treating an edible carbohydrate can be used. In addition, a sugar contained in a fruit juice or a vegetable juice can also be caramelized and used, and in this case, the sugar can be caramelized by heat treatment, acid treatment, alkali treatment, or the like. The content of caramel coloring in the carbonated beverage of the present invention can be appropriately set.

Components generally used in carbonated beverages, such as sweeteners (sucrose, glucose, fructose, isomerized liquid sugars, and high intensity sweeteners such as aspartame, sucralose, acesulfame K, and stevia), flavoring agents, acidulants (citric acid, tartaric acid, malic acid, phosphoric acid, lactic acid, and the like), colorants, fruit juices and fruit juice purees, milk and milk products, nutrient supplements (vitamins, calcium, minerals, amino acids, and the like), and preservatives (sodium benzoate and the like), may be further blended into the syrup. These components can be blended singly or in combination of a plurality of these components into the syrup.

By supplying carbonic acid to the prepared syrup, the carbonated beverage can be prepared. When carbonic acid is supplied, the syrup may be at any temperature, but by refrigerating the syrup in advance, carbonic acid can be efficiently dissolved in the syrup. The supply of carbonic acid to the syrup can be performed, for example, by mixing the syrup and carbonated water. The mixing may be performed, for example, by adding carbonated water to a container containing the syrup, may be performed by adding the syrup to a container containing carbonated water, or may be performed by transferring the syrup and carbonated water to another container. In addition, the carbonated beverage may be prepared by mixing the syrup and carbonated water in the same facility. Alternatively, a container or the like containing the syrup may be transported to another facility, and the syrup is mixed with carbonated water to prepare the carbonated beverage. Further, it is possible that the syrup is transported to a restaurant or the like, and a user mixes the syrup and water or carbonated water using hands, a tool, a machine, or the like to prepare the carbonated beverage. Alternatively, the supply of carbonic acid to the syrup can also be performed by injecting carbonic acid gas into the syrup. Carbonic acid gas can be injected into the syrup so that the gas pressure of the carbonated beverage is, for example, 0.7 kgf/cm² to 5.0 kgf/cm² or 1.0 kgf/cm² to 4.0 kgf/cm², but the gas pressure of the carbonated beverage is not limited to these.

### EXAMPLES

The present invention will be described in more detail by the following. The following description is aimed at making the understanding of the present invention easy and is not intended to limit the scope of the present invention.

### [Test Example 1] Carbonation Feeling Improvement Effect

The influence of the combination of caffeine and potassium on carbonation feeling was evaluated. Sugar, phosphoric acid, anhydrous caffeine, a flavoring agent, and potassium citrate were dissolved according to a recipe (Table 1), then carbonated water having high gas pressure was mixed, and the gas pressure was adjusted at 3.50 kgf/cm² (converted at 20°C) to make carbonated beverages.

**[Table 1]**

| Blend | | |
|---|---|---|
| Sugar | 80.0 | g |
| Phosphoric acid 75% | 1.50 | g |
| Tripotassium citrate | Table 2 | g |
| Caffeine | Table 2 | g |
| Lemon flavor | 1.32 | g |
| Caramel coloring | 0.10 | g |
| Carbon dioxide | | |
| Pure water | | |
| Total amount | 1 | L |

The amounts of anhydrous caffeine and potassium citrate in the carbonated beverages were adjusted as shown in Table 2. These carbonated beverages as test samples were subjected to a sensory test.

The test samples were cooled to 5°C, and then carbonation feeling of a carbonated beverage was evaluated by an expert panel. The evaluation was performed on a scale of 1 to 5. The carbonation feeling of the test sample comprising no caffeine or potassium was 1 point, and carbonation feeling was evaluated by comparing with that of the test sample, as follows:
2 points: carbonation feeling was felt slightly strongly,
3 points: carbonation feeling was felt strongly,
4 points: carbonation feeling was felt very strongly,
5 points: carbonation feeling was felt strongly to the extent that pain was felt For each test sample, the average point of the evaluation (sensory score) was shown in Table 2.

**[Table 2]**

| | Caffeine (mg/100ml) | | | | | |
|---|---|---|---|---|---|---|
| Potassium (mg/100ml) | 0 | 10 | 20 | 30 | 40 | 50 |
| 0 * | 1.0 | | | | | |
| 3 * | | 1.3 | | | 3.3 | 3.2 |
| 4 * | 1.3 | 1.8 | 2 | 2.8 | 3.8 | |
| 5 * | ^{.} 1.9 | 2 | 2.2 | 2.8 | 4 | 2.8 |
| 6 * | 2 | 2.4 | 2.6 | 3.2 | 4.5 | 3.6 |
| 10 * | | 2.5 | 2.7 | 3.2 | 4 | |
| 14 | | 3 | 2.8 | 3.2 | 4.5 | |
| 15 | | 3.2 | 3.4 | 3.6 | 4 | |
| 50 | 1.8 | 3.3 | 3.6 | 3.9 | 4.3 | 3.3 |
| 60 | | 3.3 | 3 | 2.7 | 4.3 | |

| | | | | | | |
|---|---|---|---|---|---|---|
| * not within the claims | | | | | | |

It was confirmed that when 10 mg to 40 mg of caffeine and 6 mg to 50 mg of potassium were present per 100 ml of the test sample, the sensory score was generally 2.5 or more, and the carbonation feeling was improved. More specifically, the sensory score tended to increase as the content of caffeine increased. For example, it was confirmed that when 30 mg to 40 mg of caffeine and 6 mg to 50 mg of potassium were present per 100 ml of the test sample, the sensory score was 3.0 or more, and the carbonation feeling was further improved. As another example, it was confirmed that when 40 mg of caffeine and 6 mg to 50 mg of potassium were present per 100 ml of the test sample, the sensory score was 4.0 or more, and the carbonation feeling was still further improved. The sensory score also tended to increase as the content of potassium increased. For example, it was confirmed that when 10 mg to 40 mg of caffeine and 14 mg to 50 mg of potassium were present per 100 ml of the test sample, the sensory score was generally 3.0 or more, and the carbonation feeling was further improved. As another example, it was confirmed that when 20 mg to 40 mg of caffeine and 15 mg to 50 mg of potassium were present per 100 ml of the test sample, the sensory score was generally 3.5 or more, and the carbonation feeling was still further improved.

From the above results, it was shown that by blending potassium at a specific content in a carbonated beverage containing a specific amount of caffeine, the carbonation feeling of the carbonated beverage was improved. In view of conventional art in which it was generally considered that the carbonation feeling of a carbonated beverage containing caffeine was not improved by blending a mineral, the above effect achieved by combining potassium and caffeine at specific content was entirely unexpected.

### [Test Example 2] Carbonation Feeling Improvement Effect in Presence of Caramel Coloring

The influence of the combination of caffeine and potassium in the presence of caramel coloring on carbonation feeling was evaluated. In addition to the components shown in Test Example 1, 0.1 g of caramel coloring per 100 ml of a carbonated beverage was blended. However, potassium was blended in the amount shown in Table 3. Using these carbonated beverages as test samples, carbonation feeling was evaluated according to the method shown in Test Example 1.

**[Table 3]**

| | Caffeine (mg/100ml) | | | | | |
|---|---|---|---|---|---|---|
| Potassium (mg/100ml) | 0 | 10 | 20 | 30 | 40 | 50 |
| 0 * | 1.0 | | | | | |
| 1 * | 1.3 | | | | | |
| 2 * | 1.3 | | | | | |
| 3 * | 1.3 | 1.4 | | . | 1.7 | |
| 4 * | 1.7 | 2.1 | 2.3 | 2.5 | 2.7 | 3.1 |
| 5 * | 2.4 | 2.7 | 2.9 | 3.1 | 3.2 | 2.8 |
| 6 * | 2.6 | 2.7 | 3.0 | 3.2 | 3.5 | 3.2 |
| 10 * | 2.7 | 2.7 | 3.2 | 3.4 | 3.7 | |
| 50 | 2.4 | 2.7 | 3.4 | 3.7 | 4.2 | 2.1 |
| 60 | 1.1 | 1.7 | | | 2.7 | |

| | | | | | | |
|---|---|---|---|---|---|---|
| * not within the claims | | | | | | |

It was confirmed that when 10 mg to 40 mg of caffeine and 4 mg to 50 mg of potassium were present per 100 ml of the test sample, the sensory score was generally 2.5 or more and the carbonation feeling was improved even in the presence of caramel coloring. More specifically, the sensory score tended to increase as the content of caffeine increased. For example, it was confirmed that when 20 mg to 40 mg of caffeine and 6 mg to 50 mg of potassium were present per 100 ml of the test sample, the sensory score was 3.0 or more, and the carbonation feeling was further improved. As another example, it was confirmed that when 30 mg to 40 mg of caffeine and 6 mg to 50 mg of potassium were present per 100 ml of the test sample, the sensory score was 3.2 or more, and the carbonation feeling was still further improved. The sensory score also tended to increase as the content of potassium increased. For example, it was confirmed that when 10 mg to 40 mg of caffeine and 6 mg to 50 mg of potassium were present per 100 ml of the test sample, the sensory score was 2.7 or more, and the carbonation feeling was further improved. As another example, it was confirmed that when 20 mg to 40 mg of caffeine and 10 mg to 50 mg of potassium were present per 100 ml of the test sample, the sensory score was 3.2 or more, and the carbonation feeling was still further improved.

It was shown that by combining caffeine and potassium at specific contents, the carbonation feeling of a carbonated beverage was improved even in the presence of caramel coloring. Thus, it can be said that the present invention is effective for the improvement of the carbonation feeling of various carbonated beverages such as carbonated beverages containing caramel coloring.

### [Test Example 3] Influence of Sodium on Carbonation Feeling

The influence of sodium on the carbonation feeling improvement effect of the combination of caffeine and potassium was studied. In addition to the components shown in Test Example 1, sodium citrate was blended to prepare carbonated beverages. However, the content of caffeine was 20 mg per 100 ml of the carbonated beverage. The amounts of potassium citrate and sodium citrate were adjusted to adjust the contents of potassium and sodium in the carbonated beverages as shown in Table 4. Using these carbonated beverages as test samples, carbonation feeling was evaluated according to the method shown in Test Example 1 (Table 4). Based on the test sample in which sodium was not blended, the carbonation feeling of the test samples in which sodium was blended was relatively evaluated.

**[Table 4]**

| | Amount of Na (per 100 ml of test sample) | | | | |
|---|---|---|---|---|---|
| Amount of K (per 100 ml of test sample) | 0 mg | 10 mg | 20 mg | 25 mg | 30 mg |
| 6 mg * | 2.6 | 1.7 | 1.5 | 1.4 | 1.0 |
| 15 mg | 3.4 | 2.6 | 2.3 | 2.2 | 1.9 |
| 30 mg | 3.5 | 2.1 | 2.0 | 1.8 | 1.5 |

| | | | | | |
|---|---|---|---|---|---|
| Na: sodium, K: potassium * not within the claims | | | | | |

The carbonation feeling tended to decrease as the sodium content of the test sample increased. For the combinations of potassium and sodium as described below, the decrease in carbonation feeling was controlled to substantially less than 50% as compared to the case of adding no sodium, and therefore it was determined that the carbonation feeling improvement effect was achieved.

When the content of potassium per 100 ml of the test sample was 6 mg, carbonation feeling was obtained when the sodium content was 25 mg or less, preferably 20 mg or less, and more preferably 10 mg or less. When the content of potassium per 100 ml of the test sample was 15 mg, carbonation feeling was obtained when the sodium content was 25 mg or less, preferably 20 mg or less, and more preferably 10 mg or less. When the content of potassium per 100 ml of the test sample was 30 mg, carbonation feeling was obtained when the sodium content was 10 mg or less. When these results were summarized, it became clear that when the total of potassium and sodium contents was 40 mg or less, generally, the carbonation feeling improvement effect of the combination of potassium and caffeine was obtained. When the total of potassium and sodium contents is preferably 30 mg or less, more preferably 25 mg or less, the carbonation feeling improvement effect was achieved more efficiently.

The fact that sodium decreased carbonation feeling in a carbonated beverage containing caffeine was not known, and the effect of controlling a sodium content to a specific amount or less was entirely unexpected.

### [Test Example 4] Influence of Sodium on Carbonation Feeling in Presence of Caramel Coloring

In addition to the components shown in Test Example 3, caramel coloring was blended so as to be 0.1 g per 100 ml of a carbonated beverage, to prepare carbonated beverages. Using these as test samples, carbonation feeling was evaluated according to the method shown in Test Example 1. The carbonation feeling of the test samples was relatively evaluated according to Test Example 3.

**[Table 5]**

| | Amount of Na (per 100 ml of test sample) | | | | |
|---|---|---|---|---|---|
| Amount of K (per 100 ml of test sample) | 0 mg | 10 mg | 20 mg | 25 mg | 30 mg |
| 6 mg* | 3.0 | 2.2 | 1.9 | 1.7 | 1.4 |
| 15 mg | 3.2 | 2.1 | 1.9 | 1.8 | 1.1 |
| 30 mg | 3.3 | 2.2 | 2.0 | 1.8 | 1.4 |

| | | | | | |
|---|---|---|---|---|---|
| Na: sodium, K: potassium * not within the claims | | | | | |

Even when caramel coloring was present in the test sample, the carbonation feeling tended to decrease as the sodium content increased. For the combinations of potassium and sodium as described below, the decrease in carbonation feeling was controlled to substantially less than 50% as compared to the case of adding no sodium, and therefore it was determined that the effect of the invention was maintained.

When the content of potassium per 100 ml of the test sample was 6 mg, carbonation feeling was obtained when the sodium content was 25 mg or less, preferably 20 mg or less, and more preferably 10 mg or less. When the content of potassium per 100 ml of the test sample was 15 mg, carbonation feeling was obtained when the sodium content was 25 mg or less, preferably 20 mg or less, and more preferably 10 mg or less. When the content of potassium per 100 ml of the test sample was 30 mg, carbonation feeling was obtained when the sodium content was 30 mg or less, preferably 25 mg or less, more preferably 20 mg or less, and further preferably 10 mg or less. When these results were summarized, it became clear that when the total of potassium and sodium contents was 40 mg or less, the carbonation feeling improvement effect of the combination of potassium and caffeine was obtained. When the total of potassium and sodium contents is preferably 30 mg or less, more preferably 25 mg or less, the carbonation feeling improvement effect was achieved more efficiently.

It became clear that sodium influenced the carbonation feeling of a carbonated beverage even in the presence of caramel coloring. It was shown that the combination of caffeine and potassium at specific content was effective for the improvement of the carbonation feeling of a carbonated beverage even in the presence of caramel coloring. Since the fact that sodium decreased carbonation feeling in a carbonated beverage containing caffeine was not known, the effect was unexpected. Thus, it can be said that the present invention is effective for the improvement of the carbonation feeling of various carbonated beverages such as carbonated beverages containing caramel coloring.

## Claims

1. A carbonated beverage comprising caffeine and potassium, the carbonated beverage comprising
10 mg to 40 mg of caffeine and
14 mg to 50 mg of potassium
per 100 ml of the carbonated beverage.

2. The carbonated beverage according to claim 1, further comprising caramel coloring.

3. The carbonated beverage according to claim 1 or 2, further comprising sodium, wherein a total of potassium and sodium contents per 100 ml of the carbonated beverage is 40 mg or less.

4. The carbonated beverage according to any one of claims 1 to 3, comprising 25 mg or more of potassium per 100 ml of the carbonated beverage.

5. A method for producing the carbonated beverage according to any one of claims 1 to 4, the method comprising preparing a syrup, adjusting the amount of the liquid, and supplying carbonic acid gas.

## Patentansprüche

1. Ein kohlensäurehaltiges Getränk, umfassend Koffein und Kalium, wobei das kohlensäurehaltige Getränk
10 mg bis 40 mg Koffein und
14 mg bis 50 mg Kalium
pro 100 ml des kohlensäurehaltigen Getränks
umfasst.

2. Das kohlensäurehaltige Getränk nach Anspruch 1, weiter umfassend eine Zuckercouleur.

3. Das kohlensäurehaltige Getränk nach Anspruch 1 oder 2, weiter umfassend Natrium, wobei ein Gesamtgehalt an Kalium und Natrium pro 100 ml des kohlensäurehaltigen Getränks 40 mg oder weniger beträgt.

4. Das kohlensäurehaltige Getränk nach einem der Ansprüche 1 bis 3, umfassend 25 mg oder mehr Kalium pro 100 ml des kohlensäurehaltigen Getränks.

5. Ein Verfahren zur Herstellung des kohlensäurehaltigen Getränks nach einem der Ansprüche 1 bis 4, wobei das Verfahren Herstellen eines Sirups, Einstellen der Menge der Flüssigkeit und Zufuhr von Kohlensäuregas umfasst.

## Revendications

1. Boisson gazeuse comprenant de la caféine et du potassium, la boisson gazeuse comprenant
10 mg à 40 mg de caféine et
14 mg à 50 mg de potassium
pour 100 ml de la boisson gazeuse.

2. Boisson gazeuse selon la revendication 1, comprenant en outre du colorant caramel.

3. Boisson gazeuse selon la revendication 1 ou 2, comprenant en outre du sodium, dans laquelle le total des teneurs en potassium et en sodium pour 100 ml de la boisson gazeuse est de 40 mg ou moins.

4. Boisson gazeuse selon l'une quelconque des revendications 1 à 3, comprenant 25 mg ou plus de potassium pour 100 ml de la boisson gazeuse.

5. Méthode pour produire la boisson gazeuse selon l'une quelconque des revendications 1 à 4, la méthode comprenant la préparation d'un sirop, l'ajustement de la quantité du liquide, et l'introduction d'acide carbonique gazeux.
